Europäisches Patentamt

European Patent Office

Office européen des brevets

(11) Veröffentlichungsnummer: **0 436 082 A2**

# (12) EUROPÄISCHE PATENTANMELDUNG

(21) Anmeldenummer: 90120414.9

(22) Anmeldetag: 24.10.90

(51) Int. Cl.5: **C02F 1/54**

(30) Priorität: 05.01.90 DE 4000214

(43) Veröffentlichungstag der Anmeldung:
**10.07.91 Patentblatt 91/28**

(84) Benannte Vertragsstaaten:
**AT CH DE ES FR GB IT LI**

(71) Anmelder: **SÜD-WEST-CHEMIE GMBH**
**Pfaffenweg 18**
**W-7910 Neu-Ulm(DE)**

(72) Erfinder: **Kopp, Otto, Dr. rer. nat.**
**Weserstrasse 2**
**W-7910 Neu-Ulm(DE)**
Erfinder: **Birnbaum, Charlotte, Dipl.-Ing. (FH)**
**Zeisigweg 5**
**W-7910 Neu-Ulm 3(DE)**
Erfinder: **Gabriel, Hubert**
**Ulrich-Tengler-Strasse 1**
**W-8884 Höchstädt(DE)**
Erfinder: **Lang, Elmar**
**Illerstrasse 42**
**W-7959 Sinningen(DE)**

(74) Vertreter: **Huber, Bernhard, Dipl.-Chem. et al**
**Patentanwälte H. Weickmann, Dr. K. Fincke**
**F.A. Weickmann, B. Huber Dr. H. Liska, Dr. J.**
**Prechtel Möhlstrasse 22 Postfach 860 820**
**W-8000 München 86(DE)**

(54) **Verfahren zur Abtrennung von Formaldehyd und/oder kolloid dispersen Anteilen aus Produktionsabwässern sowie Verwendung des sich bildenden Niederschlags.**

(57) Zur Abtrennung von Formaldehyd und/oder kolloid-dispersen Anteilen aus Produktionsabwässern stellt man in dem Abwasser bei erhöhter Temperatur einen pH-Wert im Bereich von 0 bis 3 ein, setzt eine wäßrige Harnstofflösung zu, neutralisiert nach Beendigung der Reaktion und trennt den sich bildenden Niederschlag ab.

EP 0 436 082 A2

# VERFAHREN ZUR ABTRENNUNG VON FORMALDEHYD UND/ODER KOLLOID-DISPERSEN ANTEILEN AUS PRODUKTIONSABWÄSSERN SOWIE VERDWENDUNG DES SICH BILDENDEN NIEDERSCHLAGS

Die Erfindung betrifft ein Verfahren zur Abtrennung von Formaldehyd und/oder kolloid-dispersen Anteilen aus Produktionsabwässern sowie die Verwendung des sich bildenden Niederschlags.

Bei der Herstellung und Verarbeitung von Kunstharzen entstehen Abwässer, die in mehrfacher Hinsicht Probleme aufwerfen. Diese Abwässer können die Ausgangs-Rohstoffe für die Kunstharze enthalten, die teilweise toxisch sind. Weiterhin sind in den Abwässern Anteile aus der Produktion in kolloid-disperser Form vorhanden, die nur sehr schwer zu entfernen sind. Der Gesetzgeber hat aufgrund der chemisch-physikalischen und insbesondere toxikologischen Eigenschaften der Ausgangs-Rohstoffe von Harzen, insbesondere Phenol-Formaldehyd-Harzen die zulässige Schadstoffbefrachtung von Abluft und Abwasser weitgehend reglementiert, um dadurch die Hersteller dazu zu bringen, umweltfreundliche Verfahrenstechnologien zu entwickeln und anzuwenden. Die neuen Techniken für die Entsorgung der bei der Phenol-Formaldehyd-Harzproduktion anfallenden Abwässer sind mit erheblichen Kosten verbunden. Außerdem ist gerade die Abtrennung von Phenol und Formaldehyd aus dem Abwasser äußerst aufwendig, da Formaldehyd sehr gut wasserlöslich ist und sich daher nur schwer extrahieren läßt. Bisher wurden zur Reinigung von Abwässern aus der Phenol-Formaldehyd-Harz-Produktion entweder Extraktionsverfahren oder chemische Verfahren angewendet. Bei der Extraktion sollen die in Wasser begrenzt löslichen Schadstoffe Phenol, Kresol, Xylenol usw. durch ein Lösungsmittel entfernt werden. Der Übergang der Schadstoffe aus dem Wasser in das Lösungsmittel erfolgt bis zu einem Sättigungsgleichgewicht. Durch Destillation kann dann das mit den Schadstoffen befrachtete Lösungsmittel abgetrennt werden. Für mehrfach belastete Abwässer, die sowohl Phenole oder dessen Homologe sowie Harze und Formaldehyd enthalten, sind Extraktionsanlagen ungeeignet und können nur Teilaufgaben übernehmen. Bei der Phenol-Formaldehyd-Harz-Produktion entstehen Stoffe, die grenzflächenaktive Eigenschaften entwickeln. Dadurch können während des Extraktionsvorganges stabile Emulsionen entstehen. Die Schichtentrennung Wasser/Lösungsmittel tritt mit großer Verzögerung ein, was hohe Stillstandszeiten der Anlage zur Folge hat. Außerdem kann auf diese Weise Formaldehyd nicht entfernt werden. Um die geforderten Abwasserwerte zu erreichen, muß das Abwasser in einer biologischen Nachklärstufe einer Endbehandlung unterzogen werden, die sehr hohe Kosten verursacht. Die notwendige biologische Nachklärung kann durch Abwässer mit zu hohen Formaldehydanteilen in ihrer Wirkung beeinträchtigt werden.

Weiterhin wurde für die Eliminierung von Abwasser-Schadstoffen die Behandlung mit Oxidationsmitteln vorgeschlagen. Alle dazu bekannten Oxidationsmittel bringen bei der Anwendung Probleme mit sich, wie schwierige Lagerung, Toxizität der Ausgangsstoffe, Bildung von giftigen Reaktionsprodukten, Entsorgung von Rückständen usw. Außerdem sind die Verfahren bei hoch belasteten Abwässern unrentabel, da der Kostenaufwand für die Oxidationsmittel zu hoch wird.

Eine weitere Möglichkeit besteht in der Verbrennung von Abwässern. Bei großen Abwassermengen mit relativ geringen Schadstoffgehalten sind Verbrennungsanlagen allerdings ungeeignet, da einerseits Anlagen und Betriebskosten sehr hoch sind und andererseits eine vollständige Schadstoff-freie Verbrennung nur möglich ist, wenn keine organischen Verbindungen mit Heteroatomen mit verbrannt werden. Bei Anwesenheit von Stickstoff, Phosphor oder Schwefel sind für die Reinigung der Abluft zusätzliche Anlagen notwendig, was die Kosten weiter erhöht.

Auch der Einsatz von Fällungs- und Flockungsmitteln konnte bisher nicht zu einem befriedigenden Ergebnis führen. Die Ausfällung von organischen Schadstoffen wird in der Regel mit Eisen(III)chlorid oder Aluminiumsulfat vorgenommen. Dies führt zu einer Anreicherung von Eisen und Aluminiumionen im Abwasser, die ebenfalls unerwünscht ist.

Weiterhin kann die Entsorgung von phenolhaltigen Abwässern durch Destillation erfolgen. Das Abwasser wird mit Natronlauge versetzt (1 Mol Phenol - 0,3 - 1 Mol Natronlauge) und destillativ aufgearbeitet.

Die Restphenole im Destillat werden durch Aktivkohlefiltration entfernt. Als Sumpf fällt ein hochalkalisches Gemisch von Natriumphenolat und schwarz gefärbten, organischen Abbauprodukten an. Der Rückstand kann in der Harzherstellung als Kontaktmittel eingesetzt werden, wenn keine besonderen Qualitätsforderungen gestellt werden.

Das Verfahren ist kostenintensiv (Anlagen, Energie). Größere Mengen anfallender Rückstände können nicht mehr als Kontaktmittel entsorgt werden. Eine Verbrennung ist aufgrund des hohen Alkaligehaltes nur in dafür geeigneten Anlagen möglich und deshalb entsprechend teuer.

Nicht nur aus Gründen der Schadstoffbelastung, sondern auch aus ökonomischen Gründen ist es darüberhinaus wünschenswert, die im Abwasser vorhandenen kolloid-dispersen Anteile abzutrennen, um die eingesetzten Stoffe voll auszunützen und die Verluste gering zu halten.

Es war daher Aufgabe der Erfindung, ein Verfahren zur Abtrennung von Formaldehyd und kolloid-dispersen Anteilen aus Abwässern, wie sie z.B. bei der Produktion von Phenol-Formaldehyd-Harzen auftreten, bereitzustellen, das eine weitgehende Entfernung erlaubt, kostengünstig durchzuführen ist und nicht den Einsatz toxischer Produkte fordert.

Diese Aufgabe wird gelöst durch ein Verfahren zur Abtrennung von Formaldehyd und/oder kolloid-dispersen Anteilen aus Produktionsabwässern, das dadurch gekennzeichnet ist, daß man in dem Abwasser bei erhöhter Temperatur einen pH-Wert im Bereich von 0 bis 3 einstellt, eine wäßrige Harnstofflösung zusetzt, nach Beendigung der Reaktion neutralisiert und den sich bildenden Niederschlag abtrennt.

Überraschenderweise wurde festgestellt, daß mit dem erfindungsgemäßen Verfahren Formaldehyd und kolloiddisperse Anteile praktisch quantitativ aus dem Abwasser abgetrennt werden können. Darüberhinaus wird aus Formaldehyd und Harnstoff ein Polymer gebildet, das auch die kolloiddispersen Verunreinigungen des Abwassers aufnimmt, so daß das mit dem erfindungsgemäßen Verfahren behandelte Wasser eine sehr gute Qualität aufweist. Außerdem kann der bei dem erfindungsgemäßen Verfahren gebildete Niederschlag vorteilhaft weiterverwendet werden. Abhängig von der Art der kolloid-dispersen Stoffe kann er zu Novolak-Harzen mit guter thermischer Beständigkeit und höherer Härtungsgeschwindigkeit, dekorativen Beschichtungen usw. verarbeitet werden. Das erfindungsgemäße Verfahren ermöglicht ein Recycling der Ausgangsstoffe. Weiterhin kann dieses Verfahren automatisiert werden.

Das erfindungsgemäße Verfahren eignet sich für Produktionsabwässer, wie sie z.B. bei der Kunstharz-Herstellung entstehen, die Formaldehyd sowie kolloidal verteilt Stoffe verschiedenster Zusammensetzung enthalten. Es können Verbindungen organischer oder anorganischer Natur, z.B. Pigmente wie Titandioxid und China-Clay sein.

Zur Abtrennung dieser unerwünschten Stoffe nach dem erfindungsgemäßen Verfahren wird das Abwasser bei erhöhter Temperatur mit Säure auf einen pH-Wert im Bereich von 0 bis 3 eingestellt. Das Abwasser muß so weit erwärmt werden, daß ein gleichmäßiger und schneller Umsatz erfolgt bei möglichst geringem Energieaufwand. Besonders günstig ist eine Erwärmung auf eine Temperatur im Bereich von 40 bis 50°C, da in diesem Bereich der Umsatz noch schnell genug ist und der Energieaufwand gering ist.

Der pH-Wert des Abwassers wird auf einen Wert im Bereich von 0 bis 3, bevorzugt 1 bis 2 eingestellt. Die Einstellung des pH's kann mit jeder Säure erfolgen. Bevorzugt werden allerdings Säuren eingesetzt, die keine störenden Ionen in das Abwasser einbringen. Besonders bevorzugt wird Schwefelsäure eingesetzt. Weniger bevorzugt ist der Einsatz von Salzsäure wegen der Möglichkeit der Anlagerung von HCl an organische Verbindungen, die zu unerwünschten Nebenprodukten führt.

Nach Einstellung der Temperatur- und PH-Bedingungen wird dem Abwasser eine Harnstofflösung zugesetzt, zweckmäßigerweise unter Rühren. Die Harnstoffmenge wird nach dem in dem Abwasser vorliegenden Formaldehydgehalt eingestellt. Das Molverhältnis von Harnstoff und Formaldehyd liegt dabei zweckmäßigerweise im Bereich der stöchiometrischen Umsetzung, d.h. im Bereich von 1:2 bis 1:1. Abhängig von der Harnstoffmenge bilden sich kürzere oder längere Kettenmoleküle, so daß über die Einstellung des Molverhältnisses ein Einfluß auf die entstehenden Moleküle genommen wird. Als besonders günstig hat sich ein Molverhältnis im Bereich von 1,25 bis 1,5 erwiesen. Der Harnstoff wird in Form einer wäßrigen Lösung angewendet, wobei zweckmäßigerweise die Lösungskonzentration unter der Sättigungsgrenze liegt.

Nach Zugabe der Harnstofflösung reagieren Formaldehyd und Harnstoff miteinander unter Bildung mehr oder minder hochmolekularer Produkte, die überwiegend in Kettenform vorliegen. Während der Reaktion wird die Lösung gerührt, wobei mit zunehmender Rührgeschwindigkeit die Teilchengröße abnimmt und die Absorptionsfähigkeit für die kolloiddispersen Anteile des Abwassers zunimmt.

Wenn mit dem erfindungsgemäßen Verfahren ein Abwasser behandelt werden soll, das nur kolloid-disperse Anteile, jedoch kein oder nur wenig Formaldehyd enthält, so wird dem Wasser noch Formaldehyd in einer solchen Menge zugesetzt, daß in der Lösung eine Konzentration im Bereich von 1 bis 5 % vorliegt.

Wenn die Reaktion beendet ist, was je nach den Reaktionsbedingungen nach ca. 40 bis 80 Minuten der Fall ist, wird die Lösung neutralisiert. Im vorliegenden Fall wird dabei unter Neutralisieren das Einstellen eines pH-Werts im Bereich von 5 bis 7 verstanden. Bevorzugt wird der pH-Wert auf einen Bereich von 5,5 bis 6,0 eingestellt. Die Einstellung des pH's kann mit bekannten alkalisierenden Mitteln geschehen. Bevorzugt wird zur Neutralisierung Kalkmilch eingesetzt.

Die weitere Aufarbeitung kann in zwei Varianten erfolgen. In einer Variante wird das behandelte Abwasser noch warm filtriert. Vorteil bei dieser Variante ist, daß keine Standzeiten erforderlich sind. In einer zweiten Variante wird das behandelte Abwasser einige Zeit stehengelassen, bis es abgekühlt ist und erst nach dieser Standzeit filtriert. Vorteil hier ist es, daß durch das Stehenlassen der Anteil der Verunreinigungen, der sich im Niederschlag findet, noch höher ist.

Die Abtrennung des Niederschlags erfolgt nach bekannten Methoden und kann beispielsweise mit einer Dekanter-Zentrifuge oder einer Kammer-Filterpresse erfolgen.

Das bei der erfindungsgemäßen Behandlung erhaltene Abwasser enthält praktisch kein Formaldehyd mehr. Darüberhinaus werden die ansonsten sehr schwer abzutrennenden kolloiddispersen Anteile mit ausgefällt. Nach der Klärung und Abtrennung des Niederschlags ist das Abwasser frei von diesen kolloiddispersen Verunreinigungen und von Formaldehyd. Nicht abgetrennt wird mit diesem Verfahren Phenol oder dessen Homologe. Es wird daher in einer bevorzugten Ausführungsform im Anschluß an die Abtrennung des Formaldehyds eine Abtrennung des Phenols durchgeführt.

Der bei dem erfindungsgemäßen Verfahren erhaltene Niederschlag besteht aus Harnstoff-Formaldehyd-Kondensaten, die kolloiddisperse Verunreinigungen inkorporiert enthalten. Überraschenderweise wurde nun festgestellt, daß diese Produkte besonders vorteilhafte Eigenschaften aufweisen. Ein weiterer Gegenstand der Erfindung ist daher auch die Verwendung des bei dem erfindungsgemäßen Verfahren erhaltenen Niederschlags zur Modifizierung von Phenolharzen. Bei Einsatz des erfindungsgemäß erhaltenen Niederschlages werden Harze erhalten, deren Härtungsgeschwindigkeit höher ist als die von Harzen, die mit Standard-Rezepturen erhalten wurden. Darüberhinaus ist die thermische Beständigkeit besser.

Das erfindungsgemäße Verfahren wird sehr vorteilhaft auch eingesetzt für Abwässer, die Pigmente in kolloiddisperser Form enthalten. Durch die erfindungsgemäße Fällung der dispergierten Pigmente werden Suspensionen erhalten, die zur Herstellung von dekorativen Beschichtungen eingesetzt werden können und die Deckkraft dieser Beschichtungen verstärken.

Das erfindungsgemäße Verfahren ermöglicht somit die Abtrennung von Formaldehyd aus Abwasser in praktisch quantitativer Weise. Durch die Verwendbarkeit des sich bildenden Niederschlags ist ein praktisch vollständiges Recycling der eingesetzten Stoffe sowie des Formaldehyds möglich, wobei darüberhinaus noch Produkte mit verbesserten Eigenschaften erhalten werden.

Die Erfindung wird durch die folgenden Figuren und Beispiele erläutert.

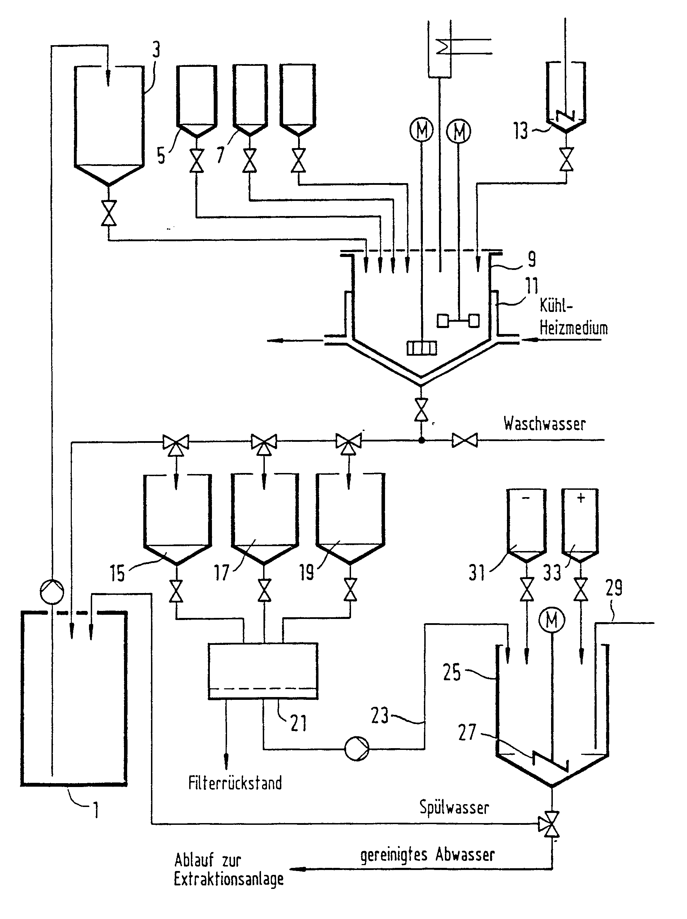

Fig. 1    zeigt eine Schemazeichnung einer zur Durchführung des erfindungsgemäßen Verfahrens geeigneten Anlage.

Ein Abwassertank 1, der Abwasser aus der Produktion von Phenol-Formaldehyd-Harzen enthält, ist mit einem Dosierbehälter 3 verbunden. Von den Dosierbehältern 3, 5, der eine Harnstofflösung enthält und 7, der Schwefelsäure enthält, führen jeweils Leitungen, die Dosiervorrichtungen enthalten, in ein Reaktionsgefäß 9. Das Reaktionsgefäß 9 weist eine Ummantelung 11 auf, die mit einem Kühl- oder Heizmedium beschickt werden kann. Weiterhin ist Dosierbehälter 13, der ein Neutralisationsmittel enthält, mit dem Reaktionsgefäß 9 über eine Zuleitung, die eine Dosiervorrichtung aufweist, verbunden. Von dem Reaktionsgefäß 9 führen Leitungen in drei Absetzbehälter 15, 17 und 19, die wiederum mit einer Filtrationsanlage 21 verbunden sind. Eine Leitung 23 verbindet die Filtrationsanlage 21 mit einem Konditionierungsbehälter 25, der mit einem Rührer 27 und einer pH-Meßsonde 29 versehen ist, sowie mit den Behältern 31 und 33, die jeweils Stellmittel enthalten, verbunden ist.

Das Abwasser wird vom Abwassertank 1 in den Dosierbehälter 3 geleitet und von dort über ein Ventil in das Reaktionsgefäß 9 dosiert. Das Reaktionsgefäß 9 wird durch Zuführung von Heizmedium in die Ummantelung 11 angewärmt. Es wird dann Schwefelsäure aus dem Dosierbehälter 7 zugegeben und die Mischung gerührt. Sobald die Mischung die gewünschte Temperatur erreicht hat, wird Harnstofflösung aus dem Dosierbehälter 5 zugegeben und weiter gerührt. Nach Beendigung der Reaktion wird Neutralisationsmittel aus dem Behälter 13 zudosiert und so lange gerührt, bis ein konstanter pH-Wert erreicht ist. Anschließend wird die Mischung aus dem Reaktionsgefäß 9 abgezogen und in die drei Absetzbehälter 15, 17, 19 geleitet. Nach mehrstündigem Stehenlassen wird aus den Absetzbehältern 15, 17, 19 die Lösung in die Filtrationsanlage 21 geleitet. Das Filtrat wird in den Konditionierungsbehälter 25 geleitet und nach Konditionierung als gereinigtes Abwasser abgeleitet, während der Filterrückstand weiter verarbeitet wird.

**Beispiel 1**

Das erfindungsgemäße Verfahren wurde im Labormaßstab durchgeführt an einem Abwasser, das die folgende Zusammensetzung hatte:

4

| freier Formaldehyd: | 2,3 % (23000 mg/l) |
|---|---|
| freies Phenol: | 3,7 % |
| freie Kresole: | 0,8 % |
| Stickstoff $(NH_4)^+$: | 0,1 % |
| CSB: | 167000. |

500 g des Abwassers wurden mit 25 g 25%iger Schwefelsäure versetzt und unter starkem Rühren auf 40°C aufgeheizt. Dann wurden 74 g einer 50%igen Harnstofflösung innerhalb von 2 Minuten zugesetzt. Nach einer Reaktionszeit von 60 Minuten bei 40°C wurden 6 g reines Calciumhydroxid aufgeschlämmt in 20 ml Wasser zugesetzt und bis zur pH-Wert-Konstanz gerührt. Die Reaktionsmischung wurde nach 20 Stunden filtriert. Es wurden 550 g Filtrat und 62,8 g Filterrückstand (44 g Trockensubstanz) erhalten. Das Filtrat wurde analysiert und hatte die folgende Zusammensetzung:

| freier Formaldehyd: | 80 mg/l |
|---|---|
| freies Phenol: | 3,3 % |
| freie Kresole: | 0 % |
| Stickstoff $(NH_4)^+$: | 0,1 % |
| Gesamtstickstoff: | 1,1 %. |

Der Gesamtstickstoff wurde auf Harnstoff umgerechnet. Es wurden 25,2 g an Harnstoff umgesetzt.

**Beispiel 2**

Das erfindungsgemäße Verfahren wurde im Betriebsmaßstab durchgeführt. Es wurde als Reaktionsgefäß ein Behälter mit 500 l Fassungsvermögen eingesetzt, der heizbar und kühlbar war und mit einem Rührer sowie einem Rotor/Stator-Rührer der Bauart Ultra-Turrax ausgerüstet war. Das zu behandelnde Abwasser hatte die folgenden Analysendaten:

| freies Formaldehyd: | 23.000 mg/l |
|---|---|
| freies Phenol: | 37.000 mg/l |
| freies Kresol: | 8.000 mg/l |
| Stickstoff $(NH_4)^+$: | 100 mg/l |
| CSB: | 167.000 mg/l. |

300 kg Abwasser wurden mit 18 kg 25%iger Schwefelsäure versetzt und unter stetigem Rühren auf 40°C aufgeheizt. Anschließend wurden 52 kg einer 50%igen Harnstofflösung bei laufendem Ultra-Turrax innerhalb von 3 Minuten zugesetzt. Der Ultra-Turrax wurde nach 10 Minuten Laufzeit abgestellt. Die Reaktion war nach 45 Minuten bei 45°C beendet. Anschließend wurden 20 kg 40%ige Kalkmilch zugesetzt und bis zu einem konstanten pH-Wert von 6,2 gerührt. Bei laufendem Rührer wurden zwei Proben entnommen: Probe A wurde heißfiltriert und das Filtrat dann untersucht. Probe B wurde 20 Stunden stehengelassen und anschließend filtriert. Auch hier wurde das Filtrat untersucht. Die Ergebnisse sind den folgenden Tabellen 1 und 2 zu entnehmen. Die Materialbilanz wurde jeweils auf eine Abwassermenge von 1000 kg umgerechnet.

# T a b e l l e  1

**Probe A - Heißfiltration**

|  | Einwaage | Auswaage Ergebnis |
|---|---|---|
| Abwasser | 1000 kg | 1173,3 kg |
| Schwefelsäure (100 %) | 15,0 kg | 2,4 kg |
| Harnstoff (100 %) | 86,7 kg | 23,5 kg |
| Kalkmilch | 26,6 kg | --- |
| Wasser | 176,1 kg | --- |
|  | 1304,4 kg | 1199,2 kg |
| Filterrückstand | --- | 105,2 kg |
|  |  | (60% Feststoff) |
|  | 1304,4 kg | 1304,4 kg |

Gegenüberstellung der Analysenergebnisse des Abwassers vor und nach der Behandlung

| freier Formaldehyd | 23.000 mg/l | 35 mg/l |
|---|---|---|
| freies Phenol | 37.000 mg/l | 30.000 mg/l |
| freies Kresol | 8.000 mg/l | 10 mg/l |
| Harze | 24.000 mg/l | 50 mg/l |
| Stickstoff $(NH_4)^+$ | 100 mg/l | 10 mg/l |
| Gesamtstickstoff | 100 mg/l | 11.000 mg/l |
| CSB | 167.000 mg/l | 100.000 mg/l |
| Sulfat-Ionen | --- | 2.000 mg/l |
| Abwasserbelastung | 92.200 mg/l | 32.105 mg/l |

Der Gesamtstickstoff von 11.000 mg/l stammt von nicht umgesetztem Harnstoff. Harnstoff ist im Abwasser als neutraler Stoff anzusehen, weil er leicht biologisch abbaubar ist.

## T a b e l l e   2

### Probe B - Filtration nach 20 Stunden

|  | Einwaage | Auswaage Ergebnis |
|---|---|---|
| Abwasser | 1000 kg | 1053,5 kg |
| Schwefelsäure (100%) | 15,0 kg | 1,5 kg |
| Harnstoff (100%) | 86,7 kg | 23,5 kg |
| Kalkmilch (100 %) | 26,6 kg | --- |
| Wasser | 176,1 kg | --- |
|  | 1304,4 kg | 1078,5 kg |
| Filterrückstand | --- | 225,9 kg |
|  |  | (60% Feststoff) |
|  | 1.304,4 kg | 1304,4 kg |

### Gegenüberstellung der Analysenergebnisse des Abwassers vor und nach der Behandlung

| | | |
|---|---|---|
| freier Formaldehyd | 23.000 mg/l | 35 mg/l |
| freies Phenol | 37.000 mg/l | 30.000 mg/l |
| freies Kresol | 8.000 mg/l | 10 mg/l |
| Harze | 24.000 mg/l | 50 mg/l |
| Stickstoff $(NH_4)^+$ | 100 mg/l | 10 mg/l |
| Gesamtstickstoff | 100 mg/l | 10.000 mg/l |
| CSB | 167.000 mg/l | 95.000 mg/l |
| Sulfat-Ionen | --- | 1.500 mg/l |
| Abwasserbelastung | 92.000 mg/l | 31.605 mg/l |

**Beispiel 3**

Das gemäß Beispiel 1 erhaltene Filtrat wurde einer Phenolextraktion unterzogen. Dazu wurde Butylacetat in dem gereinigten Abwasser dispergiert. Durch Kaskaden-Extraktion konnte der Phenolgehalt von 23.000 mg/l auf 150 mg/l reduziert werden. Die Kaskaden-Extraktion erfolgte in drei Stufen, wobei in der letzten Stufe das Abwasser, das den niedrigsten Phenolgehalt, mit Phenolfreiem Butylacetat extrahiert wird, dieses Butylacetat zur Extraktion der zweiten Stufe verwendet wird und weitergehend danach zur Extraktion der ersten Stufe eingesetzt wird.

**Beispiel 4**

Der bei dem Verfahren gemäß Beispiel 2 erhaltene Filterrückstand wurde weiter verarbeitet. Es wurden 220 kg Filterrückstand erhalten, die 60 % Feststoff aufwiesen. Der Filterrückstand wurde getrocknet, 8 Stunden lang bei 100°C. Dies ergab ein feines, klebfreies Pulver. Das Pulver wurde mit einem Anteil von 15 % einem Schleifscheibenharz zugemischt. Die thermische Stabilität dieses Materials war überraschenderweise wesentlich höher als bei Verwendung üblicher Harnstoff-Verbindungen.

**Beispiel 5**

Es wurde ein Harz, das mit dem erfindungsgemäß erhaltenen Niederschlag hergestellt wurde, verglichen mit einem Harz, das nach Standard-Rezeptur hergestellt wurde. Bei der Standard-Rezeptur wurde Phenol und Formaldehyd in einem Molverhältnis von 1:0,94 in Anwesenheit von Oxalsäure als Kontaktmittel am Kochpunkt der Reaktionsmischung umgesetzt und unter Vakuum bis auf 150°C ansteigender Temperatur entwässert. Für eine erfindungsgemäße Rezeptur wurden 24 % des Phenols durch Filterrückstand ersetzt, wie er gemäß Beispiel 4 erhalten wurde. Ansonsten wurden die gleichen Verfahrensbedingungen angewendet. Es wurden 10 % Hexamethylentetramin zugesetzt und gemeinsam vermahlen. Die Ergebnisse sind der folgenden Tabelle 3 zu entnehmen.

## T a b e l l e    3

|  | Standardrezeptur | Recyclingrezeptur |
|---|---|---|
| Ausbeute bez. auf Phenol | 101 % | 117 % |
| Visko (50 % ACE) | 18 mPa s | 23 mPa s (Bodensatz) |
| Schmelzpunkt | 80°C | 85°C |
| B-Zeit bei 130° | 15 min | 3 min |
| Fr. Phenol | 3,5 % | 0,7 % |
| Fließstrecke | 40 mm | 18 mm |

Die Härtungsgeschwindigkeit des Recycling-Novolaks ist wesentlich höher, ebenso der Schmelzpunkt.

**Ansprüche**

1. Verfahren zur Abtrennung von Formaldehyd und/oder kolloid-dispersen Anteilen aus Produktionsabwässern, **dadurch gekennzeichnet,** daß man in dem Abwasser bei erhöhter Temperatur einen pH-Wert im Bereich von 0 bis 3 einstellt, eine wäßrige Harnstofflösung zusetzt, nach Beendigung der Reaktion neutralisiert und den sich bildenden Niederschlag abtrennt.

2. Verfahren nach Anspruch 1, **dadurch gekennzeichnet,** daß man das Abwasser auf eine Temperatur von 40 bis 45°C erwärmt.

3. Verfahren nach einem der vorhergehenden Ansprüche, **dadurch gekennzeichnet,** daß man den pH-Wert in der ersten Stufe auf einen Bereich von 1 bis 2 einstellt.

4. Verfahren nach einem der vorhergehenden Ansprüche, **dadurch gekennzeichnet,** daß man den pH-Wert in der ersten Stufe mit Schwefelsäure einstellt.

8

5. Verfahren nach einem der vorhergehenden Ansprüche, **dadurch gekennzeichnet**, daß man Formaldehyd in solcher Menge zugibt, daß seine Konzentration im Bereich von 1 bis 5 % liegt.

6. Verfahren nach einem der vorhergehenden Ansprüche, **dadurch gekennzeichnet**, daß man 1 bis 2 Mol Harnstoff pro Mol Formaldehyd zusetzt.

7. Verfahren nach einem der vorhergehenden Ansprüche, **dadurch gekennzeichnet**, daß man nach Beendung der Reaktion des Harnstoffs mit dem Formaldehyd auf einen pH-Wert von 5,5 bis 6,0 einstellt.

8. Verfahren nach einem der vorhergehenden Ansprüche, **dadurch gekennzeichnet**, daß man die Neutralisierung mit Kalkmilch durchführt.

9. Verfahren nach einem der vorhergehenden Ansprüche, **dadurch gekennzeichnet**, daß man den sich bildenden Niederschlag durch eine Dekanter-Zentrifuge oder eine Kammerfilterpresse abtrennt.

10. Verfahren nach einem der vorhergehenden Ansprüche, **dadurch gekennzeichnet**, daß man nach der Neutralisierung die Lösung abkühlen läßt und den sich bildenden Niederschlag erst nach Abkühlung abtrennt.

11. Verfahren nach einem der vorhergehenden Ansprüche, **dadurch gekennzeichnet**, daß man das nach Abtrennung des Niederschlags gewonnene Filtrat einer Phenolextraktion unterzieht.

12. Verfahren nach Anspruch 11, **dadurch gekennzeichnet**, daß man Phenol aus dem Filtrat abtrennt durch Kaskaden-Extraktion mit Butylacetat.

13. Verwendung des Verfahrens nach einem der Ansprüche 1 bis 12 zur Behandlung von Abwässern aus der Kunstharz-Produktion.

14. Verwendung des bei dem Verfahren gemäß einem der Ansprüche 1 bis 12 gebildeten Niederschlags zur Modifikation von Phenolharzen.

15. Verwendung des bei dem Verfahren gemäß einem der Ansprüche 1 bis 12 gebildeten Niederschlags zur Herstellung von dispergierte Pigmente enthaltenden Suspensionen für die Herstellung von dekorativen Beschichtungen.